# EUROPÄISCHE PATENTSCHRIFT

(11) **EP 0 590 518 B1**
(45) Veröffentlichungstag und Bekanntmachung des Hinweises auf die Patenterteilung: **08.01.1997**
(21) Anmeldenummer: 93115346.4
(22) Anmeldetag: 23.09.1993
(51) Int. Cl.: B60R 21/22

(54) **Aufblasbarer Seitenaufprall-Gassack für ein Rückhaltesystem in Fahrzeugen**
Inflatable side-impact airbag for a restraining device in vehicles
Coussin d'air gonflable de collision de flanc pour un système de retenue dans un véhicule

(30) Priorität: 29.09.1992 DE 4232658
(43) Veröffentlichungstag der Anmeldung: 06.04.1994
(73) Patentinhaber: TRW Occupant Restraint Systems GmbH, 73553 Alfdorf (DE)
(72) Erfinder: Kolb, Andreas, D-73527 Schwäbisch Gmünd (DE)
(74) Vertreter: Degwert, Hartmut, Dipl.-Phys.

(56) Entgegenhaltungen:
- DE-A- 2 222 621
- DE-A- 3 032 444
- DE-A- 3 833 889
- PATENT ABSTRACTS OF JAPAN vol. 14, no. 262 (M-981)(4205) 6. Juni 1990 & JP-A-02 074 440 (NIPPON PLAST CO LTD) 14. März 1990

## Beschreibung

Die Erfindung betrifft einen aufblasbaren Seitenaufprall-Gassack für ein Rückhaltesystem in Fahrzeugen.

Ein solcher Gassack wird im Notfall aufgeblasen und dient dem Fahrzeuginsassen als Aufprallschutzkissen. Die bekannten Gassäcke sind ausgehend von einer Einlaßöffnung für den Gasgenerator ballonartig ausgebildet. Wichtig ist, daß bei einer Fahrzeugkollision der Gassack möglichst schnell, d.h. innerhalb weniger Millisekunden, aufgeblasen wird. Dies geschieht, indem der Gassack von dem Gasgenerator mit Gas aufgefüllt wird. Der Füllzeit des Gassacks mit Gas kommt insbesondere bei einem Seitenaufprall im Vergleich zu einem Frontalaufprall große Bedeutung zu. Da die zur Verfügung stehende Knautschzone sehr gering ist, wird eine besonders schnelle Füllung des Gassacks notwendig.

Aus der DE-A-38 33 889 ist ein Gassack für ein Fahrzeuglenkrad bekannt, der eine im wesentlichen torusförmige Gestalt hat. Auf seiner dem Fahrzeuginsassen zugewandten Seite ist der Gassack mit einem Spanntuch versehen, das als Prallfläche für den Fahrzeuginsassen dient.

Aus der DE-A-2 222 621 ist ein Gassack für ein Fahrzeug bekannt, der aus mehreren schlauchförmigen Einzelkammern besteht, die in einem vorbestimmten Abstand miteinander durch sich zwischen den Einzelkammern erstreckende Gewebeteile verbunden sind.

Der Erfindung liegt die Aufgabe zugrunde, einen Seitenaufprall-Gassack der eingangs genannten Art zu schaffen, der eine kurze Füllzeit mit einer hohen Stabilität des entfalteten Gassacks und einer guten Schutzwirkung kombiniert.

Diese Aufgabe wird durch einen Seitenaufprall-Gassack für ein Rückhaltesystem in Fahrzeugen gelöst, der einen Schlauch aufweist, der im entfalteten Zustand einen geschlossenen Ring bildet, und der dadurch gekennzeichnet ist, daß ein Gewebeteil vorgesehen ist, das mit einander zugewandten Bereichen der Wandung des Schlauchs verbunden ist und sich im entfalteten Zustand des Schlauchs innerhalb des von diesem umschlossenen Raums befindet, daß das Gewebeteil aus zwei miteinander verbundenen Wandungsteilen besteht, daß der zwischen diesen Wandungsteilen abgegrenzte Innnenbereich mit dem Schlauch in einer Strömungsverbindung steht und daß die beiden Wandungsteile des Gewebeteils miteinander so vernäht sind, daß das Gewebeteil im entfalteten Zustand eine allgemein flache Gestalt hat. Bei einem solchen Gassack liefert der Schlauch eine gute Schutzwirkung für einen Fahrzeuginsassen, während das Gewebeteil für eine hohe Stabilität des entfalteten Gassacks sorgt. Insgesamt ergibt sich eine relativ zur Schutzwirkung gesehen geringe Aufblaszeit.

Eine Ausführungsform der Erfindung wird nun unter Bezugnahme auf die Zeichnung näher beschrieben. In der Zeichnung zeigen:
- Fig. 1: eine schematische Seitenansicht eines aufgeblasenen Gassacks für ein Rückhaltesystem an einer Seitentür eines Fahrzeugs,
- Fig. 2: die Seitenansicht des Gassacks ohne Seitentür,
- Fig. 3: eine Schnittansicht des Gassacks entlang der Linie III-III in Fig. 2, und
- Fig. 4: eine schematische Seitenansicht einer weiteren Ausführungsform eines aufgeblasenen Gassacks.

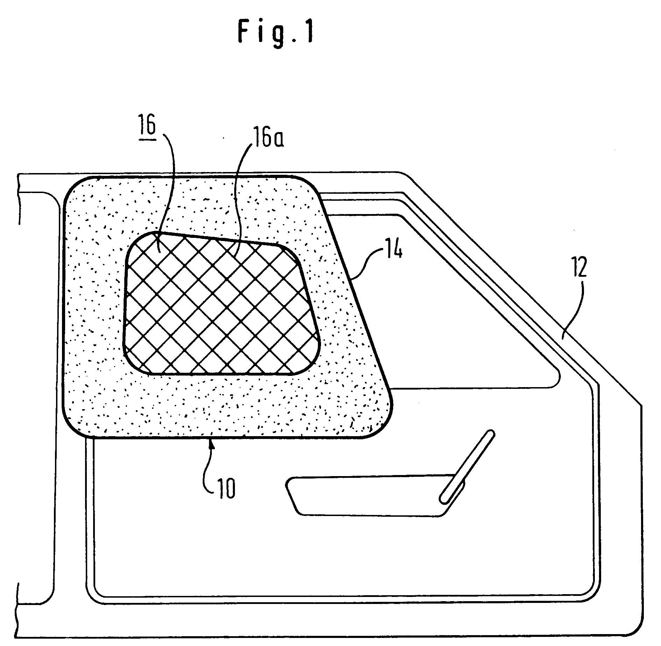

In Fig. 1 ist ein aufgeblasener Gassack 10 als Teil eines Rückhaltesystems für Fahrzeuge dargestellt, der an einer Seitentür 12 oder im Dachbereich des Fahrzeugs befestigt ist und insbesondere für den Insassenschutz beim Seitenaufprall im Fahrzeug dient. Für das Aufblasen des Gassacks 10 ist dieser an einen hier nicht dargestellten Gasgenerator angeschlossen, der den Gassack 10 innerhalb weniger Millisekunden mit Gas auffüllt.

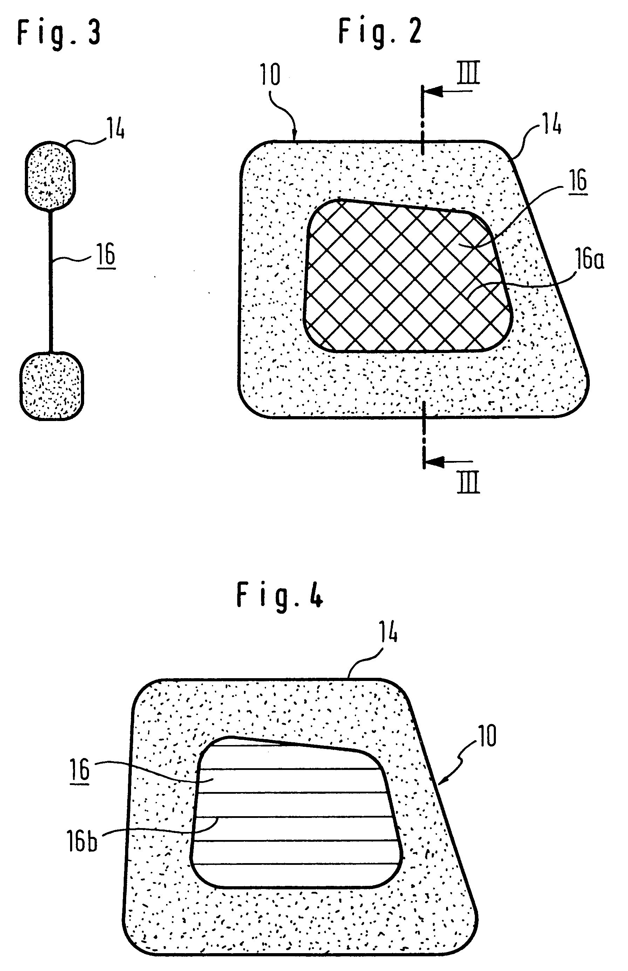

Wie auch aus Fig. 2 zu entnehmen ist, ist der Gassack 10 als ringförmiger, endloser Schlauch 14 ausgebildet. Den Innenbereich des ringförmigen Schlauchs 14 überspannt ein Gewebeteil 16, das mit dem Schlauch 14 verbunden ist. Dieses Gewebeteil 16 und die Wandung des Schlauchs 14 sind aus demselben Werkstoff. Der Gassack 10 ist nämlich durch Anbringen von Abnähungen an einen Sack hergestellt. Die Abnähungen verlaufen entlang der Innenseite des Schlauchs 14 und bilden somit den Schlauch 14 sowie das Gewebeteil 16. Somit besteht das Gewebeteil 16 aus zwei aufeinanderliegenden und miteinander vernähten Wandungen des Sacks. Das Gewebeteil 16 weist zudem eine waffelartige Ausbildung 16a auf, die ähnlich wie bei einer Luftmatraze durch Abnähungen gebildet ist. Dafür ist der Innenbereich des Gewebeteils 16 zum Auffüllen dieses Innenbereichs mit Gas mit dem Schlauch 14 strömungsmäßig verbunden.

Durch diese Ausbildung des Gassacks 10 wird ein exaktes und stabiles Ausrichten unter Reduzierung des Auffüllvolumens erreicht. Dadurch kann zudem der Gasgenerator kleiner ausgebildet werden.

Fig. 3 zeigt eine Schnittansicht des Gassacks 10 entlang der Linie III-III in Fig. 2 und verdeutlicht, daß sich der Querschnitt des Schlauchs 14 über seinen Verlauf ändert. Dadurch ist es möglich, die Form und das Gasvolumen des Schlauchs 14 anwendungsgerecht auszubilden und zu optimieren.

Das Gewebeteil 16 verbindet die aufeinandergerichteten Außenbereiche der Wandung des Schlauchs 14. Dadurch wird eine verbesserte Positionierung des Gassacks 10 ermöglicht.

In Fig. 4 ist eine weitere Ausführungsform eines aufblasbaren Gassacks 10 dargestellt. Der Gassack 10 entspricht bis auf das Gewebeteil 16 im wesentlichen den oben beschriebenen Gassack 10. Das Gewebeteil 16 weist nunmehr nämlich schlauchförmige Stege 16b auf, die ähnlich wie bei einer Luftmatraze gebildet sind. Diese sind ebenfalls durch Abnähungen gebildet und in Strömungsverbindung mit dem Schlauch 14.

Der Gassack 10 kann in der oben beschriebenen Weise hergestellt werden. Denkbar ist aber auch eine andere Ausführungsform, bei der der Schlauch 14 genäht wird und danach das Gewebeteil 16 mit der Wandung des Schlauchs 14 vernäht wird.

## Patentansprüche

1. Aufblasbarer Seitenaufprall-Gassack (10) für ein Rückhaltesystem in Fahrzeugen, mit einem Schlauch (14), der im entfalteten Zustand einen geschlossenen Ring bildet,
dadurch gekennzeichnet,
daß ein Gewebeteil (16) vorgesehen ist, das mit einander zugewandten Bereichen der Wandung des Schlauchs (14) verbunden ist und sich im entfalteten Zustand des Schlauchs (14) innerhalb des von diesem umschlossenen Raums befindet,
daß das Gewebeteil (16) aus zwei miteinander verbundenen Wandungsteilen besteht,
daß der zwischen diesen Wandungsteilen abgegrenzte Innnenbereich mit dem Schlauch (14) in einer Strömungsverbindung steht
und daß die beiden Wandungsteile des Gewebeteils (16) miteinander so vernäht sind, daß das Gewebeteil (16) im entfalteten Zustand eine allgemein flache Gestalt hat.

2. Aufblasbarer Gassack nach Anspruch 1, dadurch gekennzeichnet, daß das Gewebeteil (16) im entfalteten Zustand eine waffelartige Ausbildung (16a) aufweist.

3. Aufblasbarer Gassack nach Anspruch 1, dadurch gekennzeichnet, daß das Gewebeteil (16) im entfalteten Zustand die Gestalt von mehreren nebeneinanderliegenden schlauchartigen Stegen (16b) hat.

4. Aufblasbarer Gassack nach einem der Ansprüche 1 bis 3, dadurch gekennzeichnet, daß der Schlauch (14) und das Gewebeteil (16) durch Abnähungen in einem Sack gebildet ist.

5. Aufblasbarer Gassack nach einem der vorhergehenden Ansprüche, dadurch gekennzeichnet, daß der Schlauch (14) einen über seinen Verlauf sich ändernden Querschnitt aufweist.

## Claims

1. An inflatable side-impact gas bag (10) for a restraint system in vehicles, comprising a hose (14) which forms a closed loop in the inflated state,
characterized in
that a fabric part (16) is provided which is connected with facing portions of the wall of the hose (14) and which in the inflated state of the hose (14) is arranged within the space surrounded by said hose,
that the fabric part (16) consists of two wall portions connected with each other,
that the interior delimited by the wall portions is in fluid connection with the hose (14),
and that both wall portions of the fabric part (16) are so sewn to each other that the fabric part (16) in the inflated condition is of a generally flat shape.

2. The inflatable gas bag according to claim 1, characterized in that the fabric part (16) in its inflated state possesses a waffle-like configuration (16a).

3. The inflatable gas bag according to claim 1, characterized in that the fabric part (16) in the inflated condition is configured as being provided with several hose-like webs (16b) which are adjacent each other.

4. The inflatable gas bag according to any one of claims 1 to 3, characterized in that the hose (14) and the fabric part (16) are formed by seams provided at a bag.

5. The inflatable gas bag according to any one of the preceding claims, characterized in that the hose (14) is provided with a cross section which varies along its length.

## Revendications

1. Coussin à gaz gonflable (10) contre les chocs latéraux pour un système de retenue dans des véhicules, comprenant un boyau (14) qui, en position déployée, forme un anneau fermé, caractérisé en ce qu'il est prévu une partie en tissu (16) qui est reliée à des zones en vis-à-vis de la paroi du boyau (14) et qui, lorsque le boyau (14) est en position déployée, se trouve à l'intérieur de l'espace circonscrit par celui-ci, en ce que la partie en tissu (16) est constituée de deux parties de paroi reliées entre elles, en ce que la zone intérieure comprise entre ces parties de paroi est en communication fluidique avec le boyau (14), et en ce que les deux parties de paroi de la partie en tissu (16) sont cousues ensemble de façon qu'en position déployée la partie en tissu (16) possède une forme générale plate.

2. Coussin à gaz gonflable selon la revendication 1, caractérisé en ce qu'en position déployée la partie en tissu (16) présente un aspect gaufré (16a).

3. Coussin à gaz gonflable selon la revendication 1, caractérisé en ce qu'en position déployée la partie en tissu (16) possède la forme de plusieurs bandes (16b) en forme de boyaux disposés côte à côte.

4. Coussin à gaz gonflable selon l'une des revendications 1 à 3, caractérisé en ce que le boyau (14) et la partie en tissu (16) sont obtenus par des coutures réalisées dans un sac.

5. Coussin à gaz gonflable selon l'une des revendications précédentes, caractérisé en ce que le boyau (14) présente une section transversale qui varie sur sa longueur.
